# EUROPEAN PATENT APPLICATION

(11) **EP 1 783 589 A1**
(43) Date of publication of application: **09.05.2007**
(21) Application number: 06006366.6
(22) Date of filing: 28.03.2006
(51) Int. Cl.: G06F 3/033

(54) **A method and system for conducting a transaction using recognized text**

(30) Priority: 03.11.2005 US 267786
(71) Applicant: Leapfrog Enterprises, Inc., Emeryville, CA 94608-1070 (US)
(72) Inventor: Marggraff, James, Lafayette, CA 94549 (US)
(74) Representative: Ebner von Eschenbach, Jennifer

(57) **Abstract**

Embodiments of the present invention recite a method and system for conducting a transaction using recognized text. In one embodiment, an electronic interactive pen device recognizes a text string written on a writable surface. A function of the electronic interactive pen device is then automatically accessed. In response to accessing the function, a transaction process is initiated.

## Description

### CROSS REFERENCES TO RELATED APPLICATIONS

This Application is a Continuation-in-Part of the co-pending, commonly-owned U.S. Patent Application, Attorney Docket No. 020824-004610US, Serial No. 10/803,806, filed March 17, 2004, by James Marggraff et al., entitled "Scanning Apparatus," and hereby incorporated by reference in its entirety.

This Application is a Continuation-in-Part of the co-pending, commonly-owned U.S. Patent Application, Attorney Docket No. 020824-009500US, Serial No. 10/861,243, filed June 3, 2004, by James Marggraff et al., entitled "User Created Interactive Interface," and hereby incorporated by reference in its entirety.

This application is related to co-pending, commonly-owned U.S. Patent Application, Attorney Docket No. LEAP-P0313, Application No. 11/034,491, filed January 12, 2005, by James Marggraff et al., entitled "A METHOD AND SYSTEM FOR IMPLEMENTING A USER INTERFACE FOR A DEVICE EMPLOYING WRITTEN GRAPHICAL ELEMENTS," and hereby incorporated by reference herein in its entirety.

This application is related to co-pending, commonly-owned U.S. Patent Application, Attorney Docket No. LEAP-P0316, Application No. 11/035,155, filed January 12, 2005, by James Marggraff et al., entitled "A METHOD AND SYSTEM FOR IMPLEMENTING A USER INTERFACE FOR A DEVICE THROUGH RECOGNIZED TEXT AND BOUNDED AREAS," and hereby incorporated by reference herein in its entirety.

This application is related to co-pending, commonly-owned U.S. Patent Application, Attorney Docket No. LEAP-P0320, Application No. 11/035,003, filed January 12, 2005, by James Marggraff et al., entitled "TERMINATION EVENTS," and hereby incorporated herein in its entirety.

### BACKGROUND

### FIELD

Embodiments in accordance with the present invention generally pertain to information storage mediums and to the retrieval and use of stored information using a pen-based interactive device.

### RELATED ART

In the last twenty years, the use of personal computing devices, such as desktop computer systems, laptop computer systems, handheld computers systems, and tablet computer systems, has grown tremendously. These personal computing devices provide users with a broad range of interactive applications, business utilities, communication abilities, and entertainment possibilities.

Current personal computing devices provide access to these interactive applications via a user interface. Typical computing devices have on-screen graphical interfaces that present information to a user using a display device, such as a monitor or display screen, and receive information from a user using an input device, such as a mouse, a keyboard, a joystick, or a stylus.

Even more so than computing systems, the use of pen and paper is ubiquitous among literate societies. While graphical user interfaces of current computing devices provide for effective interaction with many computing applications, typical on-screen graphical user interfaces have difficulty mimicking the common use of a pen or pencil and paper. For example, desktop and laptop computer systems typically do not have a pen-like interface. Moreover, input into a computer is shown on an electronic display, and is not tangible and accessible like information written on paper or a physical surface.

Finally, images and writings drawn with a pen-like interface on a paper surface have convenience, permanence, and tangibility, but do not allow for easy reuse of the paper surface once it has been utilized with the pen-like interface.

### SUMMARY

Broadly, this writing discloses methods and systems for conducting a transaction using recognized text. In one embodiment, an electronic interactive pen device recognizes a text string written on a writable surface. A function of the electronic interactive pen device is then automatically accessed. In response to accessing the function, a transaction process is initiated.

Embodiments here presented teach a method and system for conducting a transaction using recognized text. In one embodiment, an electronic interactive pen device recognizes a text string written on a writable surface. A function of the electronic interactive pen device is then automatically accessed. In response to accessing the function, a transaction process is automatically initiated.

In one embodiment, a writable surface comprises a permanently printed encoded pattern of location information which provides location information to the interactive device. In embodiments of the present invention, the device may be a pen-based computing system. In embodiments of the present invention, the pen-based system recognizes a text string written upon the writable surface and automatically accesses a function of the pen-based system associated with the text string in which a transaction process is initiated. In order to perform the transaction, the pen-based system is used by the purchaser to interface with writable surface. The pen-based system can generate audible prompts to facilitate the transaction process. It is appreciated that the function may be persistently associated with the written text string. In one embodiment, a bounded region is defined which surrounds the text string. Selection of any point within the bounded region by the pen-based system then indicates a selection of the text string, and its associated function.

In the embodiments, upon receiving a user indication that a transaction is to be made, the interactive device automatically initiates a transaction sequence in which a transaction item is identified. In embodiments of the present invention, the pen-based system then initiates a search via the Internet to identify a seller of the transaction item and presents at least one seller of the transaction item to the user. The pen-based system may also present transaction options such as shipping options, purchasing parameters (e.g., find the lowest price), preferred merchants, etc. In embodiments of the present invention, the electronic interactive device may communicate with the retailer directly, or via a third party registry service. Additionally, in embodiments of the present invention, the electronic interactive device may be communicatively coupled with an electronic communication device (e.g., a cellular telephone, wireless network hub, etc.) which in turn communicates with the retailer.

In the embodiments, the transaction may also be facilitated by accessing a user account comprising, for example, the user's name, address, payment information (e.g., credit card information), etc., which may be stored in a memory of the pen-based system. Alternatively, this information may be stored in a user account in the third party registry service.

In an exemplary transaction, a user writes a text string (e.g., the word "Buy") on a writable surface using pen-based system and circumscribes the word (e.g., with a circle) to indicate to the pen-based system that the word "Buy" is associated with a specific function. The pen-based system, using optical character recognition, recognizes the circumscribed word "Buy" as an invocation of a function and accesses the associated function. In one embodiment, the circumscribed word "Buy" is associated with a transaction processing function of the pen-based system. The pen-based system then generates an audible prompt to the user asking what the user wants to purchase. For example, the pen-based system may generate the prompt, "What do you want to buy?" The user can then write name of the item of the writable surface. For example, the user may write, "War and Peace." The pen based system recognizes the text string "War and Peace" and initiates an Internet search based upon that subject. It is noted that in embodiments of the present invention, the pen-based system may generate an audible prompt before initiating the Internet search to confirm that the correct item has been identified.

When the results of the Internet search have returned, the pen-based system may generate an audible prompt to the user, "War and Peace. A novel by Leo Tolstoy. Available for $10.95 from Amazon.com®. If you would like to purchase this item, place a checkmark next to the word 'Buy'." When the user places a checkmark next to the word "Buy," the pen-based system accesses a respective user account (e.g., payment information, user address, preferred shipping methods, etc.) and places an order for that item with the seller.

In the embodiments, the writable surface may comprise an encoded pattern of location information which is readable by the pen-based system. In embodiments of the present invention, this facilitates providing a persistent availability of the function associated with the bounded text string. For example, in a subsequent selection of the bounded text string, the pen-based system may read the position information encoded within the writable surface rather than the text string itself.

In the embodiments, the pen-based system may be uniquely identified in a respective user account. This user account information may be stored in the pen-based system itself, with the retailer, or with a third party registry of respective user accounts. As described above the respective user account may also comprise information which facilitates the transaction process when accessed. For example, payment information (e.g., credit card information), the user's address, preferred shipping methods (e.g., ground mail, next-day delivery, United Parcel Service (UPS), etc.).

### BRIEF DESCRIPTION OF THE DRAWINGS

The accompanying drawings, which are incorporated in and form a part of this specification, illustrate embodiments of the invention and, together with the description, serve to explain the principles of the invention:
Figure 1 is a block diagram of an electronic interactive device upon which embodiments of the present invention can be implemented.
Figure 2 is a block diagram of another electronic interactive device upon which embodiments of the present invention can be implemented.
Figure 3 shows an exemplary sheet of paper provided with a pattern of marks according to one embodiment of the present invention.
Figure 4 shows an enlargement of a pattern of marks on an exemplary sheet of paper according to one embodiment of the present invention.
Figure 5 shows a flowchart of the steps of a computer implement process for recognizing user-created graphical element icons in accordance with one embodiment of the present invention.
Figure 6 shows an exemplary writable surface used in accordance with embodiments of the present invention.
Figure 7 is a flowchart of a computer implemented method for performing a transaction using recognized text in accordance with embodiments of the present invention.
Figure 8A is a block diagram of a transaction system in accordance with embodiments of the present invention.
Figure 8B is a flowchart of a computer implemented method for creating a user account in accordance with embodiments of the present invention
Figures 9A and 9B are a flowchart of a computer implemented method for conducting a transaction in accordance with embodiments of the present invention.

### DETAILED DESCRIPTION OF THE INVENTION

In the following detailed description of the present invention, numerous specific details are set forth in order to provide a thorough understanding of the present invention. However, it will be recognized by one skilled in the art that the present invention may be practiced without these specific details or with equivalents thereof. In other instances, well-known methods, procedures, components, and circuits have not been described in detail as not to unnecessarily obscure aspects of the present invention.

Some portions of the detailed descriptions, which follow, are presented in terms of procedures, steps, logic blocks, processing, and other symbolic representations of operations on data bits that can be performed on computer memory. These descriptions and representations are the means used by those skilled in the data processing arts to most effectively convey the substance of their work to others skilled in the art. A procedure, computer executed step, logic block, process, etc., is here, and generally, conceived to be a self-consistent sequence of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

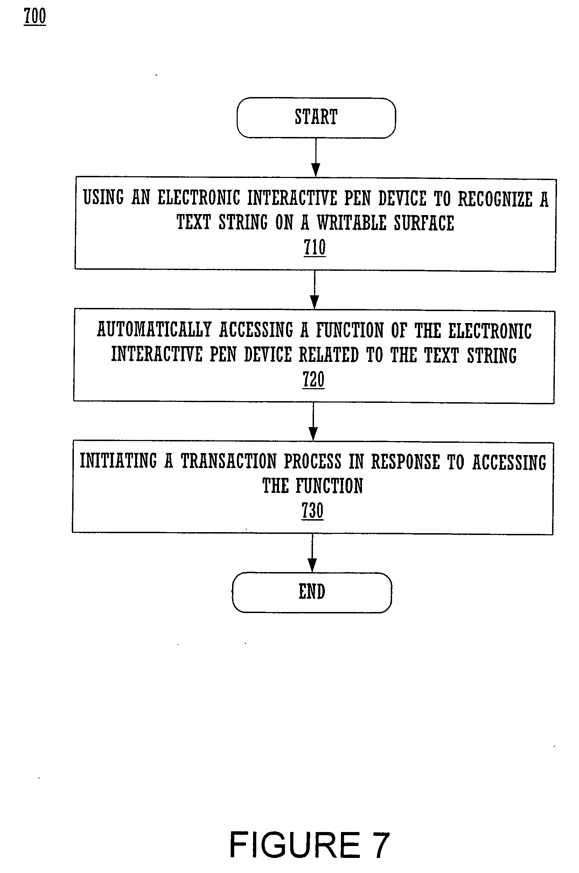

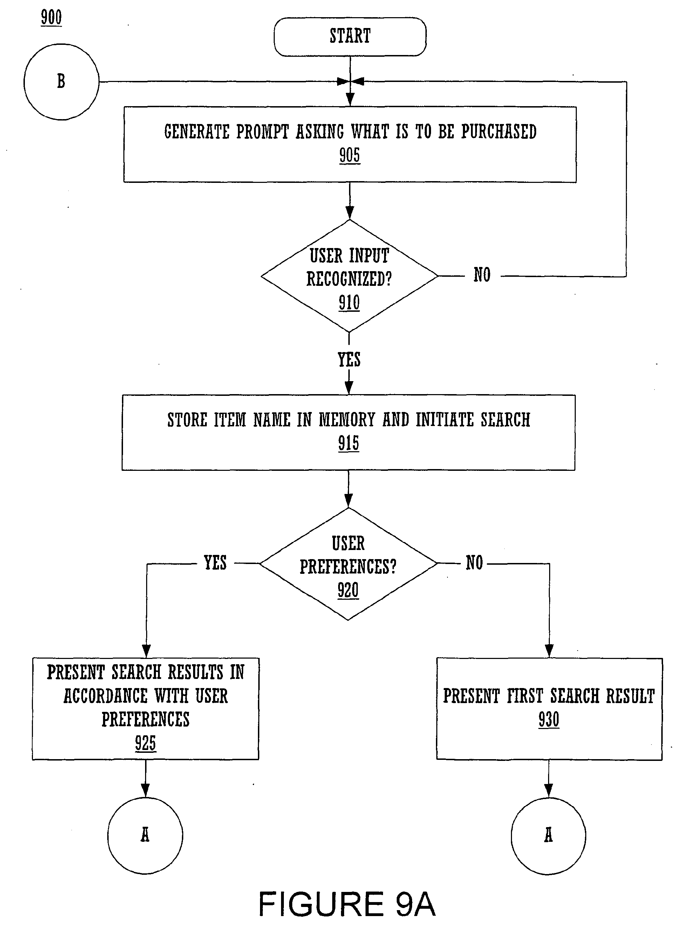

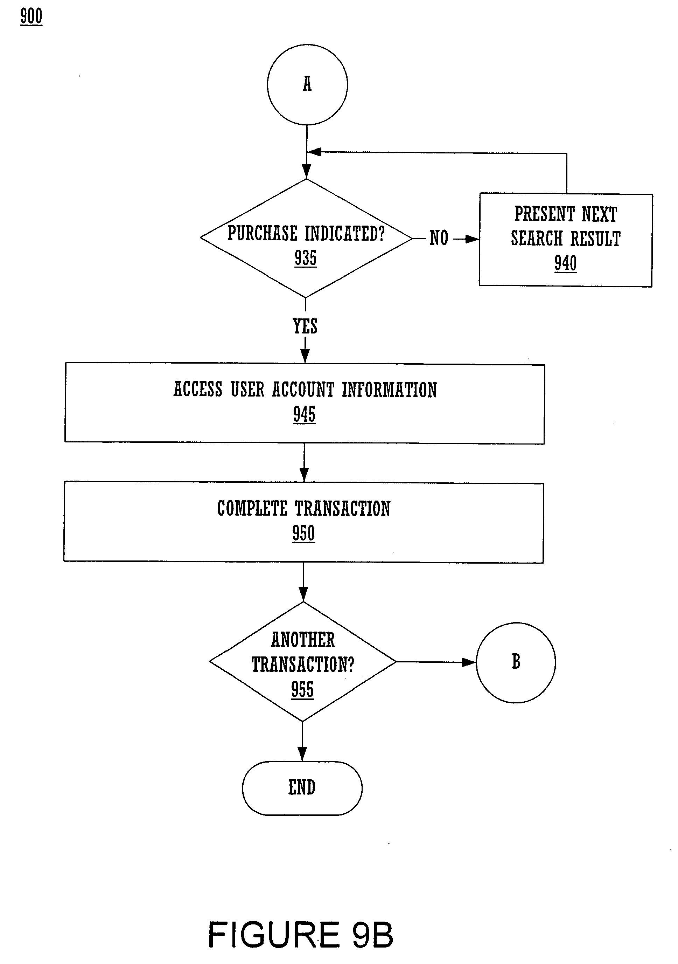

It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing terms such as "recognizing" or "initiating" or "conveying" or "embedding" or "coupling" or "accessing" or "identifying" or "receiving" or "generating" or "registering" or "associating" or "storing" or the like, refer to the actions and processes of a computer system (e.g., flowchart 700 of Figure 7, and Figures 9A and 9b, for instance), or similar electronic computing device, that manipulates and transforms data represented as physical (electronic) quantities within the computer system's registers and memories into other data similarly represented as physical quantities within the computer system memories or registers or other such information storage, transmission or display devices.

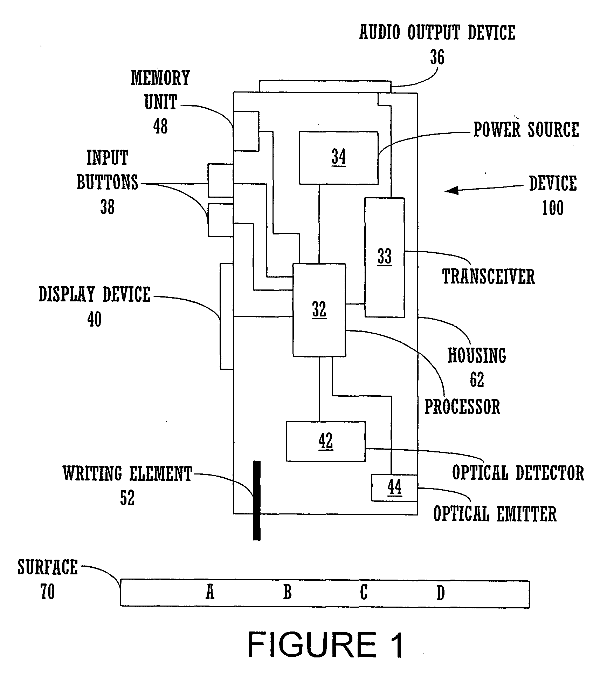

Figure 1 is a block diagram of an electronic interactive device 100 upon which embodiments of the present invention can be implemented. In general, device 100 may be referred to as a pen-shaped, or pen-based, computer system or an optical device, or more specifically as an optical reader, optical pen or digital pen.

In the embodiment of Figure I, device 100 includes a processor 32 inside a housing 62. In one embodiment, housing 62 has the form of a pen or other writing utensil. Processor 32 is operable for processing information and instructions used to implement the functions of device 100, which are described below.

In one embodiment, the device 100 may include an audio output device 36, a display device 40, or both an audio device and display device may be coupled to the processor 32. In other embodiments, the audio output device and/or the display device are optional or are physically separated from device 100, but in communication with device 100 through either a wired or wireless connection. For wireless communication, device 100 can include a transmitter or transceiver 33. The audio output device 36 may include a speaker or an audio jack (e.g., for an earphone or headphone). The display device 40 may be a liquid crystal display (LCD) or some other suitable type of display.

In the embodiment of Figure 1, device 100 may include input buttons 38 coupled to the processor 32 for activating and controlling the device 100. For example, the input buttons 38 allow a user to input information and commands to device 100 or to turn device 100 on or off. Device 100 also includes a power source 34 such as a battery.

Device 100 also includes a light source or optical emitter 44 and a light sensor or optical detector 42 coupled to the processor 32. The optical emitter 44 may be a light emitting diode (LED), for example, and the optical detector 42 may be a charge coupled device (CCD) or complementary metal-oxide semiconductor (CMOS) imager array, for example. The optical emitter 44 illuminates surface 70 or a portion thereof. Light reflected from the surface 70 is received at and recorded by optical detector 42.

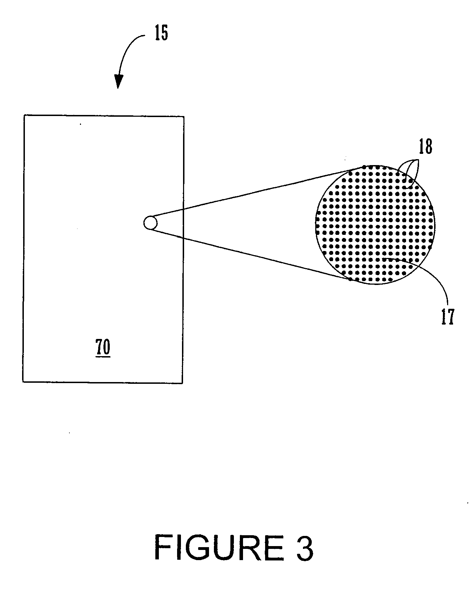

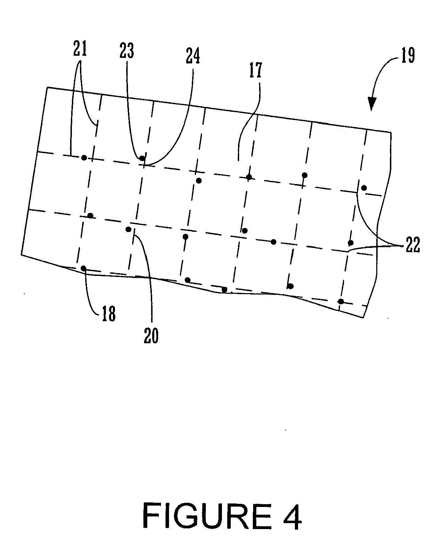

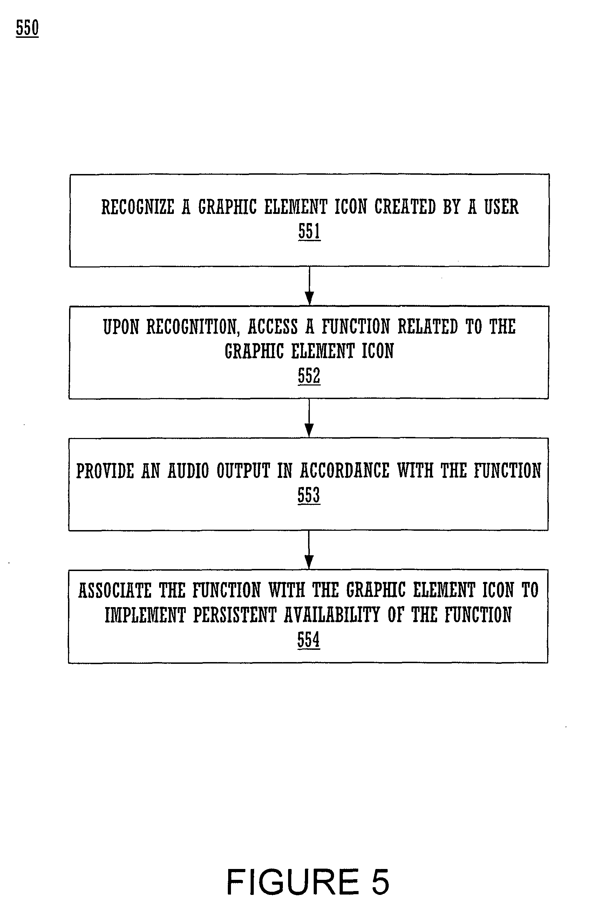

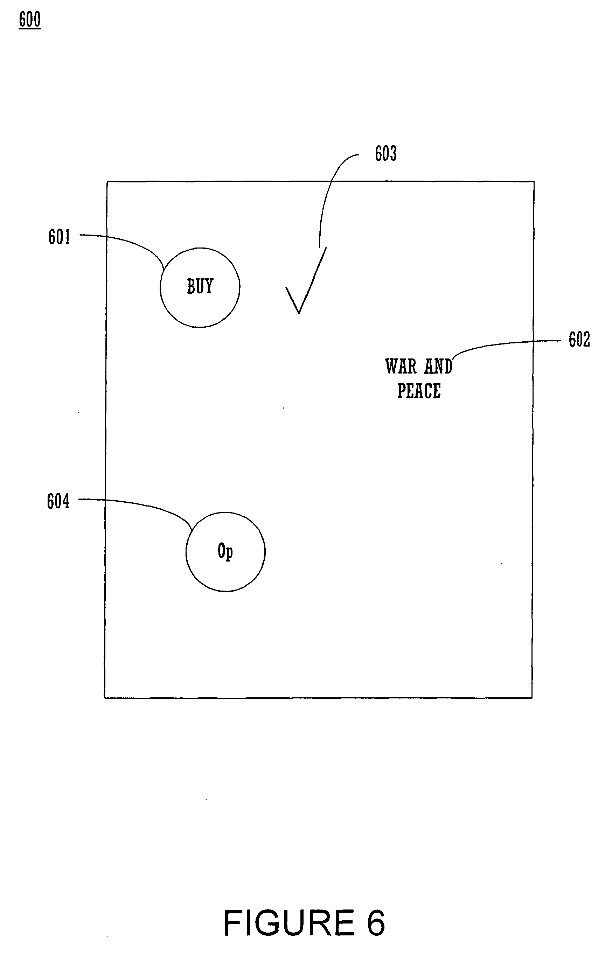

In one embodiment, a pattern of markings is printed on surface 70. The surface 70 may be any suitable surface on which a pattern of markings can be printed, such as a sheet a paper or other types of surfaces. The end of device 100 that holds optical emitter 44 and optical detector 42 is placed against or near surface 70. As device 100 is moved relative to the surface 70, the pattern of markings is read and recorded by optical emitter 44 and optical detector 42. As discussed in more detail further below, in one embodiment, the markings on surface 70 are used to determine the position of device 100 relative to surface 70 (see Figures 3 and 4). In another embodiment, the markings on surface 70 are used to encode information (see Figures 5 and 6). The captured images of surface 70 can be analyzed (processed) by device 100 to decode the markings and recover the encoded information.

Device 100 of Figure 1 also includes a memory unit 48 coupled to the processor 32. In one embodiment, memory unit 48 is a removable memory unit embodied as a memory cartridge or a memory card. In another embodiment, memory unit 48 includes random access (volatile) memory (RAM) and read-only (non-volatile) memory (ROM) for storing information and instructions for processor 32.

In the embodiment of Figure 1, device 100 includes a writing element 52 situated at the same end of device 100 as the optical detector 42 and the optical emitter 44. Writing element 52 can be, for example, a pen, pencil, marker, stylus, or the like, and may or may not be retractable. In certain applications, writing element 52 is not needed. In other applications, a user can use writing element 52 to make marks on surface 70, including characters such as letters, numbers, symbols and the like. These user-produced marks can be scanned (imaged) and interpreted by device 100 according to their position on the surface 70. The position of the user-produced marks can be determined using a pattern of marks that are printed on surface 70; refer to the discussion of Figures 3 and 4, below. In one embodiment, the user-produced markings can be interpreted by device 100 using optical character recognition (OCR) techniques that recognize handwritten characters.

Surface 70 may be a sheet of paper, although surfaces consisting of materials other than paper may be used. Surface 70 may be a flat panel display screen (e.g., an LCD) or electronic paper (e.g., reconfigurable paper that utilizes electronic ink). Also, surface 70 may or may not be flat. For example, surface 70 may be embodied as the surface of a globe. Furthermore, surface 70 may be smaller or larger than a conventional (e.g., 8.5x11 inch) page of paper. In general, surface 70 can be any type of surface upon which markings (e.g., letters, numbers, symbols, etc.) can be printed or otherwise deposited. Alternatively, surface 70 can be a type of surface wherein a characteristic of the surface changes in response to action on the surface by device 100.

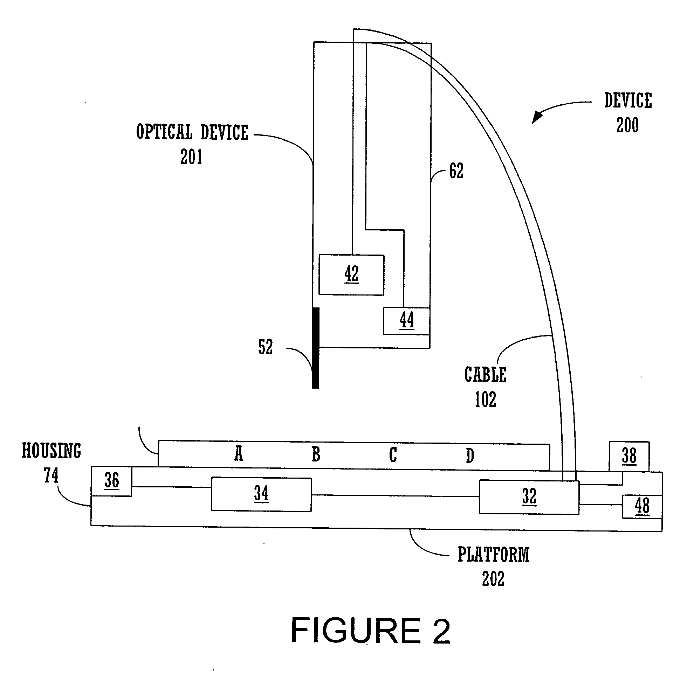

Figure 2 is a block diagram of another electronic interactive device 200 upon which embodiments of the present invention can be implemented. Device 200 includes processor 32, power source 34, audio output device 36, input buttons 38, memory unit 48, optical detector 42, optical emitter 44 and writing element 52, previously described herein. However, in the embodiment of Figure 2, optical detector 42, optical emitter 44 and writing element 52 are embodied as optical device 201 in housing 62, and processor 32, power source 34, audio output device 36, input buttons 38 and memory unit 48 are embodied as platform 202 in housing 74. In the present embodiment, optical device 201 is coupled to platform 202 by a cable 102; however, a wireless connection can be used instead. The elements illustrated by Figure 2 can be distributed between optical device 201 and platform 200 in combinations other than those described above.

Figure 3 shows a sheet of paper 15 provided with a pattern of marks according to one embodiment of the present invention. In the embodiment of Figure 3, sheet of paper 15 is provided with a coding pattern in the form of optically readable position code 17 that consists of a pattern of marks 18. The marks 18 in Figure 3 are greatly enlarged for the sake of clarity. In actuality, the marks 18 may not be easily discernible by the human visual system, and may appear as grayscale on sheet of paper 15. In one embodiment, the marks 18 are embodied as dots; however, the present invention is not so limited.

Figure 4 shows an enlarged portion 19 of the position code 17 of Figure 3. An optical device such as device 100 or 200 (Figures 1 and 2) is positioned to record an image of a region of the position code 17. In one embodiment, the optical device fits the marks 18 to a reference system in the form of a raster with raster lines 21 that intersect at raster points 22. Each of the marks 18 is associated with a raster point 22. For example, mark 23 is associated with raster point 24. For the marks in an image/raster, the displacement of a mark from the raster point associated with the mark is determined. Using these displacements, the pattern in the image/raster is compared to patterns in the reference system. Each pattern in the reference system is associated with a particular location on the surface 70. Thus, by matching the pattern in the image/raster with a pattern in the reference system, the position of the pattern on the surface 70, and hence the position of the optical device relative to the surface 70, can be determined. Additional information is provided by the following patents and patent applications, herein incorporated by reference in their entirety for all purposes: U.S. Patent No. 6,502,756; U.S. Patent Application No. 10/179,966 filed on June 26,2002; WO 01/95559; WO 01/71473; WO 01/75723; WO 01/26032; WO 01/75780; WO 01/01670; WO 01/75773; WO 01/71475; WO 01/73983; and WO 01/16691. See also Patent Application No. 60/456,053 filed on March 18, 2003, and Patent Application No. 10/803,803 filed on March 17, 2004, both of which are incorporated by reference in their entirety for all purposes.

With reference back to Figure 1, four positions or regions on surface 70 are indicated by the letters A, B, C and D (these characters are not printed on surface 70, but are used herein to indicate positions on surface 70). There may be many such regions on the surface 70. Associated with each region on surface 70 is a unique pattern of marks. The regions on surface 70 may overlap because even if some marks are shared between overlapping regions, the pattern of marks in a region is still unique to that region.

In the example of Figure 1, using device 100 (specifically, using writing element 52), a user may create a character consisting, for example, of a circled letter "M" at position A on surface 70 (generally, the user may create the character at any position on surface 70). The user may create such a character in response to a prompt (e.g., an audible prompt) from device 100, When the user creates the character, device 100 records the pattern of markings (e.g., 18 of Figure 3) that are uniquely present at the position where the character is created. The device 100 associates that pattern of markings with the character just created. When device 100 is subsequently positioned over the circled "M," device 100 recognizes the pattern of marks (e.g., 18) associated therewith and recognizes the position as being associated with a circled "M." In effect, device 100 recognizes the character using the pattern of markings at the position where the character is located, rather than by recognizing the character itself. It is noted that the user created graphical character may comprise one or more letters, or an entire word. In other words, embodiments of the present invention may record the pattern of marking that are uniquely present at a position where a user writes a word.

In one embodiment, the characters described above comprise "graphic elements" that are associated with one or more commands of the pen device 100. It should be noted that such graphic elements that are associated with, and are used to access the pen device 100 implemented functions comprising commands, are referred to as "graphical element icons" hereafter in order to distinguish from other written characters, marks, etc. that are not associated with accessing functions or applications of the pen device 100. In the example just described, a user can create (write) a graphical element icon that identifies a particular command, and can invoke that command repeatedly by simply positioning pen device 100 over the graphical element icon (e.g., the written character). In one embodiment, the writing instrument is positioned over the graphical character. In other words, the user does not have to write the character for a command each time the command is to be invoked by the pen device 100; instead, the user can write the graphical element icon for a command one time and invoke the command repeatedly using the same written graphical element icon. This attribute is referred to as "persistence" and is described in greater detail below. This is also true regarding graphical element icons that are not user written but pre-printed on the surface and are nevertheless selectable by the pen device 100.

In one embodiment, the graphical element icons can include a letter or number with a line circumscribing the letter or number. The line circumscribing the letter or number may be a circle, oval, square, polygon, etc. Such graphic elements appear to be like "buttons" that can be selected by the user, instead of ordinary letters and numbers. By creating a graphical element icon of this kind, the user can visually distinguish graphical element icons such as functional icons from ordinary letters and numbers, which may be treated as data by the pen device 100. Also, by creating graphical element icons of this kind, the pen device may also be able to better distinguish functional or menu item type graphic elements from non-functional or non-menu item type graphic elements. For instance, a user may create a graphical element icon that is the letter "M" which is enclosed by a circle to create an interactive "menu" graphical element icon.

The pen device 100 may be programmed to recognize an overlapping circle or square with the letter "M" in it as a functional graphic element as distinguished from the letter "M" in a word. The graphical element icon may also include a small "check mark" symbol adjacent thereto. Computer code for recognizing such functional graphic elements and distinguishing them from other non-functional graphic elements can reside in the memory unit in the pen device. The processor can recognize the graphical element icons and can identify the locations of those graphical element icons so that the pen device 100 can perform various functions, operations, and the like associated therewith. In these embodiments, the memory unit may comprise computer code for correlating any graphic elements produced by the user with their locations on the surface.

It should be noted that the generic term "graphic element" may include any suitable marking created by the user, and is distinguishable from a graphical element icon which refers to a functional graphic element that is used to access one or more functions of the device.

As mentioned above, it should be noted that graphical element icons can be created by the pen device 100 (e.g., drawn by the user) or can be pre-existing (e.g., a printed element on a sheet of paper). Example graphical element icons include, but are not limited to symbols, indicia such as letters and/or numbers, characters, words, shapes, lines, etc. They can be regular or irregular in shape. User written/created graphic elements are typically created using the pen device 100.

Figure 5 shows a flowchart of the steps of a computer implement process 550 for recognizing in accordance with one embodiment of the present invention. Process 550 depicts the basic operating steps of a user interface process as implemented by a device (e.g., pen device 140) in accordance with one embodiment of the present invention as it interprets user input in the form of graphical element icons (e.g., writing, marks, etc.) and provides the requested functionality to the user.

Process 550 begins in step 551, where the computer implemented functionality of the pen device 100 recognizes a created graphical element icon (e.g., created by a user). Alternatively, the graphical element icon may be preprinted on the surface and its location known to the pen device 100. At step 551, if the user is writing the graphical element icon for the first time, the pen device 100 is using the optical sensor and the processor to perform OCR (optical character recognition) on the writing to identify the user written graphical element icon. Its unique location on the surface is then also recorded, in one embodiment. In step 552, once recognized, a function related to the graphical element icon is accessed. This function can be, for example, a menu function that can enunciate (e.g., audibly render) a predetermined list of functions (e.g., menu choices or sub-menu options) for subsequent activation by the user, or to initiate a specific process (e.g., initiating a transaction). In step 553, an audio output in accordance with the function is provided. This audio output can be, for example, the enunciation of what particular choice the user is at within the list of choices, or to state what process, or event, will be initiated by device 100 or 200. In step 554, the function is persistently associated with the graphical element icon, enabling a subsequent access of the function (e.g., at some later time) by a subsequent actuation (e.g., tapping with the pen device 100) of the graphical element icon. For example, in the case of a menu function, the listed menu choices can be subsequently accessed by the user at some later time by simply actuating the menu graphical element icon (e.g., tapping it).

It is appreciated that a plurality of different graphic elements may exist on the surface and anytime, and the selection thereof may provide various functions to be executed by the pen device 100, for example, to invoked applications, invoke sub-menu options, etc.

In this manner, embodiments of the present invention implement a user interface means for navigating the functionality of a computer system, particularly the pen based computer system comprising, for example, the pen device 100. The user interface as implemented by the graphical element icons also provides the method of invoking, and interacting with, a number of software applications that execute within the pen device 100. As described above, output from the pen device 100 may include audio output, and thus, the user interface means enables the user to carry on a "dialog" with the applications and functionality of the pen device 100. The output from the pen device 100 may also comprise a visual (e.g., text) output which may be displayed by display device 40. In other words, the user interface enables the user to create mutually recognized items such as graphical element icons that allow the user and the pen device 100 to interact with one another. As described above, the mutually recognized items are typically symbols or marks or icons that the user draws on a surface, typically a sheet of paper.

Different graphical element icons have different meaning and different manners of interaction with the user. Generally, for a given graphical element icon, the manner of interaction will call up different computer implemented functionality of the pen device. For illustration purposes, in the case of the menu example above, the menu functionality allows the user to iterate through a list of functions that are related to the graphical element icon (e.g., the number of taps on the menu graphical element icon iterates through a list of functions). Audio from the pen device can enunciate the function or mode as the taps are done. One of the enunciated functions/modes can then be selected by the user through some further interaction (e.g., drawing or selecting a previously drawn checkmark graphic element associated with the graphical element icon). Once selected, the functionality and options and further sub-menus of the particular selected function can then be accessed by the user. Alternatively, if one of the audibly rendered sub-options is itself a menu graphical element icon, it can be selected by the user drawing its representation on the surface and selecting it.

In another embodiment, recognition of a graphical element icon initiates a process such as initiating a purchase or other transaction. In this embodiment, audio from the pen device can enunciate the type of transaction as the taps are done. One of the enunciated transaction can then be selected by the user through some further interaction (e.g., drawing or selecting a previously drawn checkmark graphic element associated with the graphical element icon). Once selected, further options, sub-menus and instruction for completing the transaction can be accessed by the user.

Figure 6 shows an exemplary writable surface 600 used in accordance with embodiments of the present invention. In embodiments of the present invention, writable surface 600 may be a sheet of paper with an embedded pattern of marks printed thereon as described above (e.g., sheet 15 of Figure 3). In Figure 6, a user has written a text string 601 (e.g., the word "Buy") with device 100 or 200 and circumscribed the text string as described above with reference to Figure 1, In so doing, the user has created a graphical element icon which can be recognized by an optical character recognition (OCR) system operable on system 100 or 200 as an indication that the text string is associated with a specific function. It is noted that in embodiments of the present invention, the text string may be pre-printed on writable surface 600, or written by a user of device 100 or 200. In embodiments of the present invention, upon recognizing the graphical element icon (e.g., 601), device 100 or 200 automatically accesses the function associated therewith. In embodiments of the present invention, the location information of text string 601(e.g., encoded in the pattern of markings of writable surface 600) is recorded by device 100 or 200 and stored with function associated therewith. Thus, to subsequently invoke this function, the user positions device 100 or 200 such that the optical detector 42 can detect the pattern of markings. In other words, with respect to a subsequent selection of the writing, device 100 or 200 reads the location information, not the text string itself to identify the writing.

In embodiments of the present invention, the word "Buy" initiates accessing a transaction processing function of device 100 or 200. In one embodiment, when the transaction function is accessed, an audible prompt may be generated by device 100 or 200 (e.g., using audio output device 36) which asks the user to identify a transaction item. For example, device 100 or 200 may generate the audible prompt, "What do you want to buy?" In response, the user writes a second text string 602 (e.g., the title "War and Peace") on writable surface 600 using device 100 or 200. Device 100 or 200 again uses the OCR system to recognize the item that the user wants to purchase. In one embodiment, device 100 or 200 saves the title "War and Peace" in memory unit 48. In embodiments of the present invention, device 100 or 200 then initiates a search (e.g., via an Internet search engine) to find the item identified by the user and, if possible, a seller of that item.

In the present example, the Internet search may have returned a first result in which the book "War and Peace" is offered for sale via Amazon.com®. In the present example, device 100 or 200 may generate another audible prompt which informs the user that the book is available for sale. For example, device 100 or 200 may generate the audible prompt, "War and Peace. A novel by Leo Tolstoy. Available for $10.95 from Amazon.com®. If you would like to purchase this item, place a checkmark next to the word 'Buy', or next to 'War and Peace'." If the user wants to buy the book at that price and from that seller, the user may place a checkmark (e.g., 603), or another indication, next to the word "Buy." If the user does not want to buy the book at that price, or from that seller, the user may simply refrain from making any marking upon writable surface 600.

It is noted that in embodiments of the present invention, some words, text strings, marks, symbols, or other graphic elements, need not be processed at all using OCR. For example, the particular word, graphic element, etc., can be created by the user in response to an audible prompt from device 100 or 200, wherein the pen device prompts the user to write the particular word or symbol (e.g., a checkmark) and subsequently stores the location information of what the user has written with an association (e.g., the audible prompt). The subsequent selection of that word or symbol by the user is recognized by the location information embedded in writable surface 600. For example, device 100 or 200 may generate the audible prompt, "Write the word 'Dog'." In response the user may write a the word "Cat". However, device 100 or 200 will store the location information of the word created by the user. In a subsequent user selection of the word "Cat," device 100 or 200 recognizes the location information and associates the meaning of the location information with the word "Dog" rather than recognize the text characters of the word "Cat." This functionality is called "prompt and believe."

In embodiments of the present invention, when the user is done writing the prompted word, device 100 or 200 recognizes the fact that the user is finished by, for example, recognizing the inactivity (e.g., the use is no longer writing) as a data entry termination event. In this manner, a "timeout" mechanism can be used to recognize the end of data entry. Another termination event could be a case where the word is underlined or circumscribed as described above. Additional examples of termination events are described in the commonly assigned United States Patent Application "TERMINATION EVENTS", serial number 11/035,003, by Marggraff et al., filed on January 12,2005, Attorney Docket No. LEAP-P0320, and is incorporated herein in its entirety.

The prompt and believe feature of embodiments of the present invention enables the creation of graphic elements having meanings that are mutually understood between the user and device 100 or 200. Importantly, it should be understood that there is no OCR processing being done on the word or character created by the user. Graphic elements created using the prompt and believe function can be associated with labels for other application, options, menus, functions, etc., whereby selection of the prompt and believe graphic element (e.g., by tapping) can invoke any of the above. Reducing the requirement for OCR processing lowers the computational demands on devices 100 or 200 and thus improves the responsiveness of the user interface.

In embodiments of the present invention, device 100 or 200 may wait for a pre-determined period for the user to make a checkmark next to the text string. If the user does not make an indication in the pre-determined time period, device 100 or 200 may generate additional audible prompts such as offering a menu of transaction options. For example, device 100 or 200 may generate the audible prompt, "If you would like to find the lowest price for this item, place a checkmark next to the word 'Buy'." It is noted that embodiments of the present invention may offer other transaction options such as a preferred method of payment, a preferred method of shipment, a preferred retailer, preferred shipping address, etc.

It is further noted that some transaction items may offer ordering options (e.g., size, color, etc.). Thus, in embodiments of the present invention, device 100 or 200 may generate additional audible prompts such as, "How many do you want to purchase?" "What color would you like?" "What size would you like?" Furthermore, a list of the available options may be presented (e.g., an audible listing of the available colors). In response, the user may write the amount, color, size, etc. that they desire to purchase on writable surface 600. This user input will be recognized by device 100 or 200 using OCR. It is further noted that in embodiments of the present invention, the prompting may comprise visual prompts displayed on display device 40 instead of, or in addition to, the audible prompts generated by device 100 or 200.

In an embodiment of the present invention, a user can access an options menu by, for example, writing a graphical element icon 604 (e.g., the letters Op) which may be circumscribed by as described above. In response, the transaction function of device 100 or 200 may generate an audible prompt of a first transaction option category (e.g., "Sort by price"). If the user wants to configure this sub-category, the user may make an indication as described above. If the user wants to configure another option, they may simply wait until a next audible prompt is generated, or tap graphical element icon 604 again. In embodiments of the present invention, user configurations of the transaction function are stored in memory and may be accessed later when subsequent transactions are conducted.

Figure 7 is a flowchart of a computer implemented method 700 for conducting a transaction using recognized text in accordance with embodiments of the present invention. In step 710 of Figure 7, an electronic interactive pen device is used to recognize a text string on a writable surface. As described above, in embodiments of the present invention, device 100 or 200 is operable for recognizing a text string using optical detector and OCR processing performed by processor 32.

In step 720 of Figure 7, a function of the electronic interactive pen device related to the text string is automatically accessed. As discussed above with reference to Figure 5, the user interface, as implemented by the graphical element icons, also provides the method of invoking, and interacting with, a number of software applications that execute within device 100 or 200. In embodiments of the present invention, in response to recognizing the text string "Buy," device 100 or 200 automatically accesses a software function for conducting a transaction. It is noted that in embodiments of the present invention, the transaction function may be invoked using another text string such as "Purchase," or the like. In embodiments of the present invention a plurality of similar meaning text strings (e.g., "Buy," "Purchase," "Shop," "Obtain," etc.) in any written language may invoke the transaction function of device 100 or 200, thus providing a more user friendly interface for invoking the transaction function.

In step 730 of Figure 7, a transaction process is initiated in response to accessing the function. As described above, when the transaction function is accessed, a transaction process is initiated in which device 100 or 200 interacts with the user to identify a transaction item as well as other options which the user may implement. Step 730 may utilize wired or wireless communication with a remote server or network.

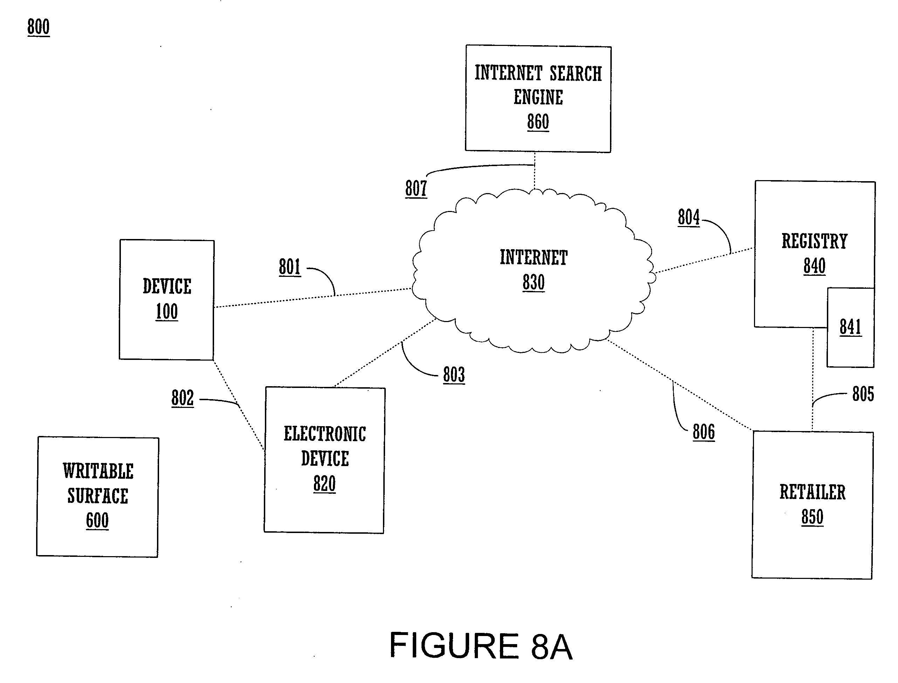

Figure 8A is a block diagram of a transaction system 800 in accordance with embodiments of the present invention. In Figure 8A, a writable surface (e.g., 600) is scanned by an electronic interactive system (e.g., device 100). In one embodiment, device 100 is communicatively coupled with Internet 830 via link 801. In another embodiment, device 100 is communicatively coupled via link 802 with an electronic device 820 (e.g., a cellular telephone, a WiFi hub, a wireless network hub, etc.) which is in turn communicatively coupled with Internet 830 via link 803. In one embodiment, a registry 840 is communicatively coupled with Internet 830 via link 804 and with a retailer 850 via link 805. Alternatively, retailer 850 may be communicatively coupled directly with Internet 850 via link 806. Additionally, an Internet search engine 860 is communicatively coupled with the Internet via link 807.

In embodiments of the present invention, a user can initiate a transaction process as described above using device 100 to recognize the text string written on writable surface 600. In response a transaction function of device 100 or 200 automatically is invoked. In one embodiment, the user identifies the transaction item which is to be purchased. Device 100 or 200 then initiates a search using, for example, Internet search engine 860 to identify a seller of the transaction item. While the present embodiment recites using an Internet search engine, in other embodiments of the present invention, this function may be performed by, for example, registry 840. In one embodiment, when the user identifies the seller (e.g., retailer 850) with which the transaction will be conducted, communication is then initiated via Internet 830 with either the retailer 850, or with registry 840. A message is then conveyed which initiates a transaction (e.g., purchase of the good or service recognized from printed medium 810).

In one embodiment, the device 100 communicates directly with Internet 830 using, for example, transceiver 33 (e.g., a cellular communication device, or other wireless communication device). In another embodiment, device 100 communicates directly with electronic device 820 using, for example, a Bluetooth enabled communication device, a wireless local area network (LAN) communication device, or the like. Electronic device 820 may be, for example, a cellular telephone, a wireless network hub which is communicatively coupled with Internet 830.

In one embodiment of the present invention, device 100 initiates a transaction with retailer 850 to purchase the transaction item. This may comprise a series of discrete communications in which user information (e.g., name, address, and payment information) as well as additional transaction information (e.g., preferred method of delivery, color, quantity, or other parameters of the transaction item) is conveyed to retailer 850. In one embodiment, device 100 may comprise a database which stores user account information such as user name, and payment information, as well as a unique registration number of device 100. In embodiments of the present invention, this information can be accessed by retailer 850 to facilitate completing the transaction.

In another embodiment of the present invention, the transaction is performed through a third party intermediary (e.g., registry 840). In embodiments of the present invention, registry 840 comprises a plurality of user accounts (e.g., 841)which are maintained as a service to the respective users of devices 100. In one embodiment, each device 100 stores a unique registration number in its local database which is used to identify that device to registry 840. Using this information, registry 840 can access further user account information such as user name, address, payment information, etc. Registry 840 can forward this information to retailer 850 to facilitate the transaction.

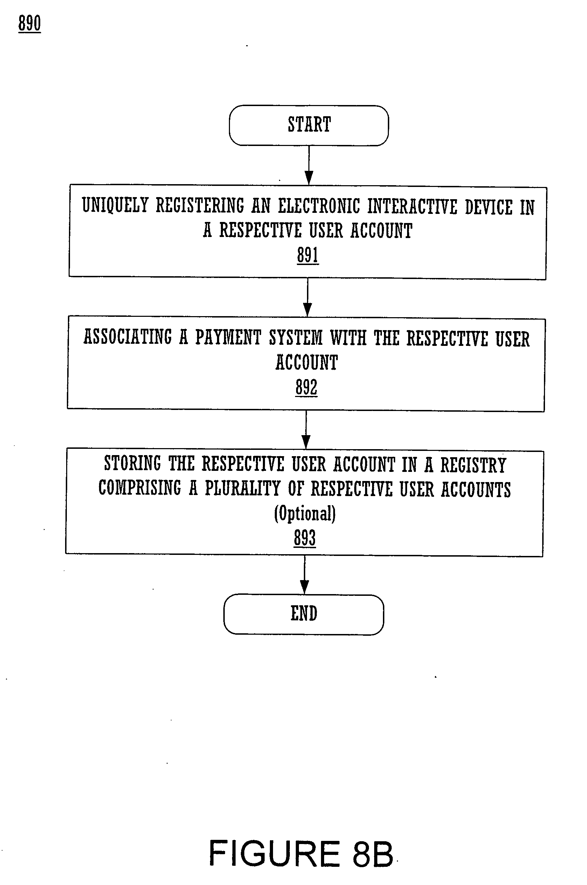

Figure 8B is a flowchart 890 of a computer implemented method for establishing a user account in accordance with embodiments of the present invention. In step 891, an electronic interactive device is uniquely registered in a respective user account. In embodiments of the present invention, each interactive electronic device (e.g., 100 or 200) stores a unique identification number. In embodiments of the present invention, this number may be stored in a hidden location that is not generally accessible to a user. Additionally, this number may be encrypted or scrambled to prevent an unauthorized user from determining what the number is. In embodiments of the present invention, the unique identification number is used in conjunction with the user account to enhance the security of transactions conducted using device 100 or 200. For example, if an unauthorized user attempts to initiate transactions utilizing another user's account, the retailer or third party registry may require that the unique identification number of device 100 or 200 be provided before proceeding. If the identification number is not provided, the transaction will be terminated at this point.

In step 892, a payment system is associated with the respective user account. In embodiments of the present invention a user's credit card number, bank account, or other payment system is associated with the user's account to facilitate purchasing transaction items using device 100 or 200. Thus, in order to complete the transaction, a retailer will access this payment information in order to insure payment is made for the good or service being purchased.

In optional step 893, the respective user account is stored in a registry comprising a plurality of respective user accounts. In embodiments of the present invention, the user account may be stored in a third party registry of user accounts (e.g., 840 of Figure 8). However, embodiments of the present invention are not limited to this system alone. In other embodiments of the present invention, the user account may be stored in device 100 or 200, or may be stored with a retailer (e.g., 850 of Figure 8).

Figures 9A and 9B are a flowchart of a computer controlled transaction process 900 in accordance with embodiments of the present invention. It is appreciated that process 900 is the function automatically accessed in response to recognizing a graphical element icon using device 100 or 200 as described above with reference to Figure 7. In step 905 of Figure 9A, a prompt is generated asking the user what item is to be purchased. In embodiments of the present invention, the prompt may be audible and/or visual. In one embodiment, the prompt may be presented to the user via electronic device 820.

In step 910 of Figure 9A, it is determined whether the user input is recognized. For example, in embodiments of the present invention, when the user writes on writable surface 600, device 100 or 200 generates an audible and/or visual prompt to indicate that the user's writing has been correctly interpreted by device 100 or 200. In embodiments of the present invention, the OCR processing may spell each letter of the text string separately if the text string is not recognized as a word by device 100 or 200.

In step 915 of Figure 9A, the name of the item which is to be purchased is stored in memory and a search for that item is initiated. In embodiments of the present invention, an Internet search using the name of the transaction item identified by the user as a search parameter. Furthermore, in embodiments of the present invention, the name of the transaction item is used as a search parameter at individual web sites of retailers. For example, if the user wants to buy the book "War and Peace," that title is used at a search parameter at, for example, Amazon.com®.

In step 920 of Figure 9A, it is determined whether the user has configured any transaction preferences. For example, if the user has configured device 100 or 200 with a preferred retailer, the first result from the search returned will be a price quote from that retailer. If the user has indicated a preference to do business with a particular retailer, the search results pertinent to that retailer will be the first presented to the user of device 100 or 200. Thus, process 900 continues at step 925. If the user has not indicated a preference for a particular retailer, process 900 continues at step 930. It is appreciated that the user may have configured other transaction parameters with device 100 or 200 as well. For example, the user may have indicated that the results should be sorted from lowest price to highest for the identified transaction item.

In step 925 of Figure 9A, if the stored user preferences indicate that the user of device 100 or 200 prefers a particular retailer, the search result from that retailer are presented first. In embodiments of the present invention, process 900 then continues at step 935.

In step 930 of Figure 9A, it is determined whether the user wants to purchase the transaction item in accordance with the search result presented. In embodiments of the present invention, if the user indicates that the first presented search result is satisfactory (e.g., by placing a checkmark or other indication on writable surface 600), process 900 continues at step 945. If no indication from the user is detected by device 100 or 200, process 900 continues at step 940.

In step 940 of Figure 9B, if the user indicates that they are not interested in purchasing the transaction item in accordance with the terms presented by the retailer, the next result from the search is presented. At this point, process 900 returns to step 935.

In step 945 of Figure 9B, in response to the user indicating that a purchase with the present retailer is acceptable, user account information is accessed. As described above, in embodiments of the present invention, the user account information may be stored on device 100 or 200, at the website of the retailer, or at a third party registry of user accounts. Thus, if the user indicates that the purchase terms are acceptable, device 100 or 200 may access the user account information and send it via Internet 830 to the retailer. In another embodiment, the user name and password to a user account at either registry 840 or retailer 850 is sent by device 100 or 200 to facilitate accessing the user account information. In embodiments of the present invention, this may be performed transparently to the user.

In step 950 of Figure 9B, the transaction is completed. As described above, in some transactions, additional input from the user may be necessary. For example, the user may have to specify the amount, size, color, or other options, that they want applied to the transaction item. Thus, in embodiments of the present invention, a series of prompts (e.g., audible and/or visual) may be generated by device 100 or 200. For example, device 100 or 200 may generate the following prompts:
"What color would you like to buy?"
"How many would you like?"
"What size do you want?"
   These prompts may be followed by a listing of the available options in that category (e.g., red, blue, yellow, green, brown, black, etc.). In embodiments of the present invention, this information may be conveyed as a series of discreet communications. Also, if the user has not indicated a preference, a prompt may be generated asking if there is a preferred method of shipping.

In step 955 of Figure 9B, it is determined whether the user wants to make another purchase. If the user does want to make another purchase, process 900 continues at step 905. If the user does not want to make another purchase, process 900 is ended.

Embodiments of the present invention, provide a simple interface with which a user can conduct transactions with a pen-based computer system. Furthermore, embodiments of the present invention are more portable that a conventional laptop computer and provide a more user-friendly interface than is typically found in, for example, cellular telephones or hand held computer systems. As a result, greater user convenience is realized in embodiments of the present invention.

Embodiments of the present invention are thus described. While the present invention has been described in particular embodiments, it should be appreciated that the present invention should not be construed as limited by such embodiments, but rather construed according to the below claims.

## Claims

1. A method of conducting a transaction using recognized text, said method comprising:
using an electronic interactive pen device or optical unit device to recognize a text string on a writable surface;
automatically accessing a function of said device related to said text string; and
initiating a transaction process in response to accessing said function.

2. The method of Claim 1 wherein said device is used for initiating said transaction process.

3. The method as recited in Claim 1 or 2 further comprising:
providing an audible output from said device and wherein said audible output is related to said function.

4. The method as recited in Claim 1 further comprising:
using said electronic interactive pen device or optical unit to recognize a second text string which identifies a transaction item that is to be purchased.

5. The method as recited in Claim 4 further comprising:
performing or initiating a search process wherein a seller of said transaction item is identified and using the Internet to identify a seller of said transaction item.

6. The method as recited in Claim 4 further comprising:
using said electronic interactive pen device or optical unit to recognize an indication from a user to purchase said transaction item, and/or presenting at least one transaction option prior to completing said transaction, and/or generating an audible confirmation of said transaction item.

7. The method as recited in Claim 1 wherein said writable surface comprises an encoded pattern of location information printed therein.

8. The method as recited in Claim 1 further comprising:
creating a bounded area which surrounds said text string;
associating said function with said bounded area; and
storing the association of said function with said bounded area to implement a persistent availability of said function.

9. The method as recited in Claim 1 further comprising:
uniquely registering said device in a respective user account, associating a payment system with said respective user account, conveying information from said respective user account during said transaction, storing said respective user account in a registry comprising a plurality of respective user accounts, and storing said respective user account in a memory device of said device.

10. A transaction system comprising:
a writable surface comprising an encoded pattern of location information embedded therein which is recognizable to an electronic interactive pen device;
an electronic interactive pen device for recognizing a text string on said writing surface and for automatically accessing a function of said electronic interactive pen device wherein a transaction process is initiated; and
a communication network accessible by said electronic interactive pen device for conveying a message which initiates said transaction process.

11. The transaction system of Claim 10 wherein said electronic interactive pen device is further for providing an audible output related to said function.

12. The transaction system of Claim 10 wherein said electronic interactive pen device is further for recognizing a second text string which identifies a transaction item that is to be purchased.

13. The transaction system of Claim 12 wherein said electronic interactive pen device is further for initiating a search process wherein a seller of said transaction item is identified.

14. The transaction system of Claim 13 wherein said communication network comprises a wireless communication network and wherein said electronic interactive pen device accesses the Internet via said wireless communication network to identify a seller of said transaction item.

15. The transaction system of Claim 12 wherein said electronic interactive pen device recognizes an indication from a user to purchase said transaction item.

16. The transaction system of Claim 12 wherein said electronic interactive pen device presents at least one transaction option prior to completing said transaction.

17. The transaction system of Claim 12 wherein said electronic interactive pen device generates an audible confirmation of said transaction item.

18. The transaction system of Claim 10 wherein said writable surface comprises an encoded pattern of location information embedded therein.

19. The transaction system of Claim 10 wherein said electronic interactive pen device is used to create a bounded area on said writable surface which surrounds said text string and stores an association of said function with said bounded area to implement a persistent availability of said function.

20. The transaction system of Claim 10 further comprising:
a respective user account and wherein said electronic interactive pen device is uniquely registered with said respective user account, said respective user account comprising a payment system which is associated with said respective user account, said communication network conveying information from said respective user account to a seller of said transaction item during said transaction.

21. The transaction system of Claim 20 wherein said respective user account is stored in a registry comprising a plurality of respective user accounts.

22. The transaction system of Claim 20 wherein said respective user account is stored in a memory device of said electronic interactive pen device.

23. An interactive pen device comprising:
a writing tool for marking on a writable surface;
an optical unit for detecting locations of said writing tool with respect to said writable surface to detect a text string written upon said writable surface;
a processor coupled with said optical unit; and
a memory coupled with said processor, said memory for storing instructions that when executed implement a method of conducting a transaction using recognized text, said method comprising: the steps of any one of claims 1, 4, or 6-9.

24. The interactive pen device of Claim 23 further comprising an audio output device and wherein said method further comprises:
rendering an audible output from said audio output device and wherein said audible output is related to said function.

25. The interactive pen device of Claim 23 further comprising a wireless communication device coupled with said processor and wherein said performing said search process comprises:
using said wireless communication device to communicatively couple said interactive pen device with the Internet in response to said initiating.

26. The interactive pen device of Claim 23 wherein said method further comprises:
using said audio output device to generate an/said audible confirmation of said transaction item.

27. The interactive pen device of Claim 23 wherein said optical unit is further for recognizing an/said encoded pattern of location information printed on said writable surface.

28. The interactive pen device of Claim 8 or 23 wherein said method further comprises:
using said writing tool or interactive pen device to create said bounded area.
